(19) Europäisches Patentamt
European Patent Office
Office européen des brevets

(11) EP 2 393 895 B1

(12) **EUROPÄISCHE PATENTSCHRIFT**

(45) Veröffentlichungstag und Bekanntmachung des Hinweises auf die Patenterteilung:
**02.12.2015 Patentblatt 2015/49**

(21) Anmeldenummer: **10702079.4**

(22) Anmeldetag: **22.01.2010**

(51) Int Cl.:
***C08F 220/18*** *(2006.01)* ***C09J 133/08*** *(2006.01)*
***C09J 7/00*** *(2006.01)*

(86) Internationale Anmeldenummer:
**PCT/EP2010/050707**

(87) Internationale Veröffentlichungsnummer:
**WO 2010/089203 (12.08.2010 Gazette 2010/32)**

(54) **TRANSFER-HAFTKLEBEBAND MIT UNTERSCHIEDLICHER HAFTUNG AUF BEIDEN SEITEN SOWIE VERFAHREN ZUR HERSTELLUNG DES HAFTKLEBEBANDES**

PRESSURE-SENSITIVE ADHESIVE TRANSFER TAPE WITH DIFFERENTIATED ADHESION ON EITHER SIDE AND METHOD FOR PRODUCING THE TAPE

RUBAN ADHÉSIF TRANSFERT PRÉSENTANT UNE ADHÉRENCE DIFFÉRENTE SUR SES DEUX FACES ET PROCÉDÉ DE FABRICATION DE CE RUBAN ADHÉSIF

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **05.02.2009 DE 102009007589**

(43) Veröffentlichungstag der Anmeldung:
**14.12.2011 Patentblatt 2011/50**

(73) Patentinhaber: **TESA SE**
**20253 Hamburg (DE)**

(72) Erfinder:
- **HUSEMANN, Marc**
**22605 Hamburg (DE)**
- **KLIER, Daniel**
**21465 Reinbek (DE)**
- **LÜHMANN, Bernd**
**22844 Norderstedt (DE)**

(56) Entgegenhaltungen:
**EP-A1- 0 628 616**
**WO-A1-93/09152**
**WO-A1-2004/081133**
**WO-A2-2006/113715**
**WO-A2-2008/005782**
**DE-A1-102006 019 219**
**JP-A- 2006 299 053**
**US-A1- 2003 232 192**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 393 895 B1

## Beschreibung

Die Erfindung betrifft ein Transfer-Haftklebeband zur Verklebung von optischen Bauteilen sowie ein Verfahren zu Herstellung eines Haftklebebandes.

Haftklebemassen werden heute sehr vielfältig eingesetzt. So existieren im Industriebereich die verschiedensten Anwendungen. Besonders zahlreich werden Klebebänder basierend auf Haftklebemassen im Elektronikbereich oder im Konsumgüterelektronikbereich eingesetzt. Auf Grund der hohen Stückzahlen lassen sich hier Haftklebebänder sehr schnell und leicht verarbeiten. Im Gegensatz dazu wären andere Prozesse, wie z.B. Nieten oder Schweißen, zu aufwendig. Neben der normalen Verbindungsfunktion müssen diese Haftklebebänder ggf. noch weitere Funktionen übernehmen. So kann dies z.B. eine thermische Leitfähigkeit, eine elektrische Leitfähigkeit oder auch eine optische Funktion sein. In letzterem Fall werden z.B. Haftklebebänder eingesetzt, die lichtabsorbierende Funktionen zur Vermeidung des Ein- oder Austritts von Licht an ungewollter Stelle oder lichtreflektierende Funktionen zur Leitung/Verteilung von Licht erfüllen. Eine weitere optische Funktion ist beispielsweise die Bereitstellung einer geeigneten Lichttransmission. Hier werden Haftklebebänder und Haftklebemassen eingesetzt, die hochtransparent sind, um optische Bauteile miteinander zu verbinden und z.B. Luft auszuschließen Dies hat den Vorteil, dass die Reflektion vermindert wird, die durch den Übergang von Luft zum z.B. optischen Medium aus Glas entsteht. Zudem besitzt die Haftklebemasse natürlich noch eine Haltefunktion. Anwendungsgebiete derartiger Haftklebemassen sind z.B. die Verklebung von Touch-Panels auf einem LCD oder OLED-Display oder die Verklebung von ITO-Filmen (indium tin oxide - Indiumzinnoxid) für kapazitive Touch Panels.

Insbesondere im Elektronikbereich werden Haftklebemassen in Gestalt so genannter Transfer-Haftklebebänder eingesetzt, d.h. als Klebebänder ohne permanenten Träger. Als permanenter Träger werden Träger bezeichnet, die auch nach der Verklebung noch im Klebeband enthalten sind. Im Gegensatz dazu werden temporäre Träger (auch als Liner oder Release bezeichnet) bei oder unmittelbar nach der Verklebung vom eigentlichen Klebeband entfernt. Wenn im Folgenden ein Klebeband als "trägerlos" bezeichnet wird, so ist damit stets gemeint, dass dieses Klebeband keinen permanenten Träger aufweist.

Hochtransparente Haftklebemassen für optische Zwecke sind an sich bekannt. So werden bevorzugt Acrylathaftklebemassen eingesetzt, da diese eine hohe Transparenz aufweisen, alterungs- und witterungsbeständig sind sowie auch nicht durch Nachkristallisation nachtrüben. Neben der hochtransparenten Funktion müssen aber optische Haftklebemassen noch zusätzliche Funktionen erfüllen. Beispiele hierfür sind z.B. in US 2004/0191509 A1 sowie in US 2003/0232192 A1 beschrieben. Hier werden Touch-Panels direkt auf Displays verklebt, um so die Bauhöhe z.B. der Mobiltelefone zu verringern und die Transmission des Bildes durch das Touch-Panel hindurch zu erhöhen. Die Verklebung ist allerdings mit Problemen verbunden, da hier schon geringste Luftblaseneinschlüsse die Darstellung des Bildes negativ beeinflussen. Daher werden Haftklebemassen mit unterschiedlichen Klebkräften eingesetzt. Dies wird dadurch erreicht, dass auf einen Träger zwei unterschiedliche Haftklebemassen mit unterschiedlicher Klebkraft beschichtet werden oder zwei unterschiedliche Haftklebemassen direkt aufeinander beschichtet werden. Beide Verfahren sind relativ aufwendig und komplex.

Ferner sind aus der Praxis immer mehr Anwendungen für Haftklebebänder mit differenzierten Haftklebemassen bekannt, da z.B. am Ende des Lebenszyklus eines Elektronikgerätes die einzelnen Bauteile auseinander genommen werden müssen und dieser Prozess erleichtert wird, wenn zumindest eine Haftklebemassenseite leichter abgetrennt werden kann.

Aus dem Stand der Technik DE 43 16 317 C2, DE 101 63 545 A1) ist es bekannt, unterschiedliche Klebeeigenschaften auf Ober- und Unterseite in einer Klebeschicht zu vereinen, in dem die Klebemasse nicht gleichmäßig vernetzt wird sondern ein Vernetzungsgradient innerhalb der Klebeschicht eingestellt wird. Weitere Beispiele für Klebebänder mit Vernetzungsgradient über die Klebeschicht zeigen die Schriften DE 10 2006 019 219 A, EP 628 616 A und WO 2008/005782 A.

Ein transparentes Transfer-Klebeband mit unterschiedlichen Klebeeigenschaften auf Ober- und Unterseite für die Verklebung optischer Bauteile wird im Stand der Technik JP 2006 299053 A offenbart. Die Klebeschicht basiert auf einem (Meth)acrylatcopolymer und umfasst einen Photoinitiator.

Der vorliegenden Erfindung liegt die Aufgabe zugrunde, ein Haftklebeband anzugeben dass die besonderen Anforderungen für die Verklebung von optische Bauteilen erfüllt und zudem vereinfacht wieder ablösbar ist. Ferner sollte das Klebeband einfach herstellbar sein.

Die vorliegende Erfindung löst das Problem durch die Verwendung eines Transfer-Klebebandes gemäß Anspruch 1.

Die besonderen Anforderungen an Klebebänder für optische Anwendungen werden nur von speziellen Haftklebemassen erfüllt. Eine besondere Herausforderung stellt dabei die permanente Verklebung mittels einer hochtransparenten Haftklebemasse dar. Um dieser Anforderung gerecht zu werden, ggf. aber auch ein Wiederablösen zu ermöglichen, sollte eine geeignete hochtransparente Haftklebemasse auf der Ober- und Unterseite unterschiedliche Klebkräfte aufweisen. Dies erfordert in der Regel einen hohen Aufwand bei der Herstellung durch mehrfache Beschichtung eines

Trägers und/oder ein Zukaschieren verschiedener Haftklebemassen zueinander.

Es hat sich gezeigt, dass spezielle Haftklebemassen sowohl für optische Anwendungen geeignet sind, als auch durch geeignete Bestrahlung unterschiedliche Klebkräfte an Ober- und Unterseite aufweisen. Entsprechend kann ein Transfer-Haftklebeband, also ein trägerloses Haftklebeband mit unterschiedlichen Klebkräften an Ober- und Unterseite durch Beschichtung eines temporären Trägers mit der Haftklebemasse und anschließende Bestrahlung hergestellt werden.

Als geeignete Haftklebemasse für das Transfer-Haftklebeband hat sich eine Haftklebemasse basierend auf Poly(meth)acrylatcopolymer herausgestellt. Die Polyacrylat-haltige Haftklebemasse basiert auf einem haftklebrigen Poly(meth)acrylatcopolymer mit folgenden Monomeren a):

a1) Acrylsäure und/oder Acrylsäureester der folgenden Formel:

$$CH_2 = C(R^1)(COOR^2),$$

wobei $R^1$ = H oder $CH_3$ und $R^2$ eine Alkylkette mit 1 - 30 C-Atomen ist,

a2) olefinisch ungesättigte Monomere mit funktionellen Gruppen.

Die Monomere der Gruppe a1) sind zu mindestens 50 Gew.-% bezogen auf Gesamtkomponente (a), bestehend aus a1) und a2) enthalten, die Monomere der Gruppe a2) zu 0 - 30 Gew.-%, bezogen auf die Gesamtkomponente (a). Ferner weist die Haftklebemasse einen Photoinitiator b), insbesondere einen UV-Photoinitiator, mit einem Anteil von 0 - 5 Gew.-%, bezogen auf die Gesamt-Polymermischung auf. Der Anteil des Photoinitiators richtet sich dabei insbesondere nach der Art der Bestrahlung, sofern eine Elektronenstrahlvernetzung vorgesehen ist, ist üblicherweise kein Photoinitiator enthalten (der Anteil beträgt 0%); bei einer UV-Vernetzung, insbesondere mittels UV-A-Strahlung ist der Anteil üblicherweise größer 0%. Gegebenenfalls kann die Haftklebemasse zudem auch weitere Komponenten enthalten.

Durch eine aktinische Bestrahlung, d.h. eine die Vernetzung auslösende Bestrahlung, üblicherweise mittels UV-Licht oder Elektronenbestrahlung, wird innerhalb der Haftklebemasseschicht ein Vernetzungsgradient erzeugt - die bestrahlte Seite wird hochvernetzt und weist somit eine geringere Klebkraft auf als die geringer vernetzte, der Strahlung abgewandte Seite. Insbesondere wird somit eine Klebkraftdifferenz zwischen Oberseite und Unterseite der Klebemassenschicht von mindestens 30%, bevorzugt von mindestens 50%, bezogen auf die niedrigere Klebkraft erzielt, d.h. die Seite mit der höheren Klebkraft weist mindestens 130% der Klebkraft der Seite mit der niedrigeren Klebkraft auf. Um eine ausreichende Verbindung der zu verklebenden Bauteile zu erzielen, ist eine Mindestklebkraft von 1 N/cm auf beiden Seiten der Haftklebeschicht erforderlich und wird bei geeigneter Vernetzung erreicht. Die Eindringtiefe der Strahlung in die Klebemasseschicht und damit die Vernetzung in der jeweiligen Tiefe ist abhängig von Art und Intensität der Strahlung aber auch von der Haftklebemasse und evtl. zusätzlich darin vorhandenen Komponenten. Die genaue Abstimmung muss daher im Einzelfall vorgenommen werden, Beispiele für eine geeignete Vernetzung sind nachfolgend angegeben.

Insbesondere kann die zuvor beschriebene Haftklebemasse die für optische Anwendungen geforderten Eigenschaften erfüllen. Erzielt wird eine Lichttransmission von mindestens 80 %, bevorzugt von mindestens 85 % und ein Haze-Wert von maximal 5 %, bevorzugt von maximal 2,5 % auf (gemessen jeweils nach ASTM D1003).

In bevorzugter Ausgestaltung enthält die Haftklebemasse als Vernetzer einen bi- oder multifunktionalen Vernetzer oder eine Mischung derartiger Vernetzer. Der Gewichtsanteil der Vernetzer beträgt bevorzugt bis zu 5 Gew.-%, bezogen auf die Gesamt-Polymermischung.

Als Vernetzer lassen sich hier alle bi- oder multifunktionellen Verbindungen einsetzen, deren funktionelle Gruppen mit den geformten Radikalen eine Verknüpfungsreaktion eingehen können. Bevorzugt werden diese Reaktionen an einer Doppelbindung durchgeführt. So eignen sich z.B. auch bi- und multifunktionelle Vinylverbindungen als Vernetzersubstanzen.

Eine nebengeordnete Lösung des zuvor beschriebenen Problems stellt ein Verfahren zur Herstellung eines Klebebandes bereit. Ein solches Klebeband ist insbesondere ein Transfer-Klebeband, das Verfahren eignet sich aber auch für Klebebänder mit permanentem Träger. Zur Herstellung des Klebebandes wird zunächst ein temporärer oder permanenter Träger mit einer Haftklebemasse beschichtet. Bei der Haftklebemasse handelt es sich um eine solche basierend auf einem Poly(meth)acrylatcopolymers wie sie vorstehend beschrieben ist. Die so gebildete Haftklebeschicht wird dann mittels aktinischer Strahlung von einer Seite, vorzugsweise von der nicht durch den Träger bedeckten Seite, bestrahlt. Die Dosis wird dabei so gewählt, dass die Strahlungsintensität mit der Eindringtiefe der Strahlung in die Haftklebeschicht abnimmt, so dass auf der zur Strahlung hingerichteten Seite eine hohe Vernetzung erreicht wird und auf der abgewendeten Seite eine geringere oder gar keine Vernetzung. Durch die Abstimmung der Vernetzung werden die Klebkräfte so eingestellt, dass sich die Klebkraft nach PSTC-1 der zur Strahlung hin gerichteten Seite sich von der Klebkraft der der Strahlung abgewandten Seite um mindestens 30% bezogen auf den jeweils niedrigeren Wert unterscheidet.

*Haftklebemasse:*

Bei der Auslegung und Gestaltung optischer Bauteile, wie z.B. Glasfenstern oder Folien zum Schutz von Displays, muss die Wechselwirkung der verwendeten Materialien mit der Art des eingestrahlten Lichts berücksichtigt werden. In einer abgeleiteten Version nimmt der Energieerhaltungssatz die Form

$$T(\lambda) + p(\lambda) + a(\lambda) = 1$$

an, wobei T(λ) den Anteil des transmittierten Lichts, p(λ) den Anteil des reflektierten Lichts und a(A) den Anteil des absorbierten Lichts beschreibt (A: Wellenlänge) und wobei die Gesamtintensität des eingestrahlten Lichts auf 1 normiert ist. Je nach Anwendung des optischen Bauteils gilt es, einzelne dieser drei Terme zu optimieren und die jeweils anderen zu unterdrücken. Optische Bauteile, die für die Transmission ausgelegt werden, sollen sich durch Werte von T(A), die nahe bei 1 liegen, auszeichnen. Dies erreicht man, indem p(A) und a(A) im Betrag reduziert werden. Haftklebemassen auf Acrylatcopolymerbasis weisen normalerweise keine nennenswerte Absorption im sichtbaren Bereich, d. h. im Wellenlängenbereich zwischen 400 nm und 700 nm, auf. Dies kann leicht durch Messungen mit einem UV-Vis Spektralphotometer überprüft werden. Von entscheidendem Interesse ist daher p(A). Reflexion ist ein Grenzflächenphänomen, das von den Brechungsindizes $n_{d,i}$ von zwei in Kontakt tretenden Phasen i abhängt und durch die Fresnel-Gleichung beschrieben wird:

$$\rho(\lambda) = \left( \frac{n_{d,2} - n_{d,1}}{n_{d,2} + n_{d,1}} \right)^2$$

Für den Fall isorefraktiver Materialien, für die $n_{d,2} = n_{d,1}$ gilt, wird p(A) = 0. Dies erklärt die Notwendigkeit, den Brechungsindex einer für optische Bauteile zu verwendenden Haftklebemasse denjenigen der zu verklebenden Materialien anzupassen. Typische Werte für verschiedene solcher Materialien sind in Tabelle 1 aufgeführt.

Tabelle 1

| Material | Brechungsindex $n_d$ |
|---|---|
| Quarzglas | 1,458 |
| Borkron (BK7) | 1,514 |
| Borkron | 1,518 |
| Flint | 1,620 |
| (Quelle: Pedrotti, Pedrotti, Bausch, Schmidt, Optik, 1996, Prentice-Hall, München. Daten bei X = 588 nm) | |

Wie bereits beschrieben wurde, werden als Haftklebemassen (Meth)acrylathaftklebemassen eingesetzt. Die (Meth)acrylathaftklebemassen, welche durch radikalische Polymerisation erhältlich sind, bestehen zu mindestens 50 Gew.-% aus zumindest einem acrylischen Monomer aus der Gruppe der Verbindungen der folgenden allgemeinen Formel basiert:

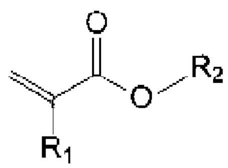

wobei $R_1$ = H oder $CH_3$ ist und der Rest $R_2$ = H oder $CH_3$ ist oder gewählt wird aus der Gruppe der verzweigten oder unverzweigten, gesättigten Alkylgruppen mit 1 - 30 Kohlenstoffatomen.

Die Monomere werden dabei bevorzugt dermaßen gewählt, dass die resultierenden Polymere bei Raumtemperatur oder höheren Temperaturen als Haftklebemassen eingesetzt werden können, insbesondere derart, dass die

resultierenden Polymere haftklebende Eigenschaften entsprechend des "Handbook of Pressure Sensitive Adhesive Technology" von Donatas Satas (van Nostrand, New York 1989) besitzen.

In bevorzugter Ausgestaltung, insbesondere für die Verwendung bei der Verklebung von optischen Bauteilen, weisen die (Meth)acrylathaftklebemassen bei 20°C einen Brechungsindex $n_d > 1{,}47$ auf.

Die (Meth)acrylathaftklebemassen lassen sich bevorzugt durch Polymerisation einer Monomermischung gewinnen, welche sich aus Acrylsäureestern und/oder Methacrylsäureestern und/oder deren freien Säuren mit der Formel

$$CH_2 = CH(R_1)(COOR_2)$$

zusammensetzt, wobei $R_1$ = H oder $CH_3$ und $R_2$ = H oder eine Alkylkette mit 1 - 20 C-Atomen ist.

Die Molmassen $M_w$ der eingesetzten Polyacrylate betragen bevorzugt $M_w \geq 200.000$ g/mol.

In weiter bevorzugter Ausgestaltung werden Acryl- oder Methacrylmonomere eingesetzt, die aus Acryl- und Methacrylsäureester mit Alkylgruppen aus 4 bis 14 C-Atomen bestehen, bevorzugt 4 bis 9 C-Atome umfassen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Dctylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat. Weitere einzusetzende Verbindungsklassen sind monofunktionelle Acrylate bzw. Methacrylate von überbrückten Cycloalkylalkohalen, bestehend aus mindestens 6 C-Atomen. Die Cycloalkylalkohole können auch substituiert sein, z.B. durch C-1-6-Alkylgruppen, Halogenatome oder Cyanogruppen. Spezifische Beispiele sind Cyclohexylmethacrylate, Isobornylacrylat, Isobornylmethacrylate und 3,5-Dimethyladamantylacrylat.

In einer weiteren Ausgestaltung werden Monomere eingesetzt, die polare Gruppen wie Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-, Cyanreste, Ether oder ähnliches tragen.

Moderate basische Monomere sind z.B. N,N-Dialkylsubstituierte Amide, wie z.B. N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylet, Phenoxyethylacrylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Vinylessigsäure, Tetrahydrofurfurylacrylat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren sehr bevorzugten Ausgestaltung werden als Monomere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich 9 einige Beispiele genannt: Vinylacetat, Vinylformamid, Vinylpyridin, Ethylvinylether, Vinylchlorid, Vinylidenchlorid und Acrylonitril.

Insbesondere werden besonders bevorzugt Comonomere eingesetzt, die mindestens einen Aromaten tragen, der eine Brechungsindex erhöhende Wirkung aufweist. Als Komponenten eigenen sich aromatische Vinylverbindungen, wie z.B. Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Wie beschrieben wird in bevorzugter Ausgestaltung die Comonomerzusammensetzung derart gewählt, dass der Brechungsindex größer 1,4700 beträgt. Dabei kann ausgehend von dem Brechungsindex der jeweiligen Homopolymere über die anteilige Zusammensetzung im Copolymer der Brechungsindex berechnet werden. Eine Auflistung typischer Brechungsindizes von Homo- und Copolymeren findet sich im Polymer Handbook, 4th Edition, J. Brandrup, E.H. Immergut, E.A. Grulke, John Wiley & Sons, Inc..

Die Verwendung von Reinacrylat-Haftklebemassen ist bevorzugt, wenn der Abfall der Strahlendosis mit der Eindringtiefe in die Haftklebeschicht nicht zu groß sein soll. Wenn jedoch ein größerer Abfall der Strahlendosis über die Eindringtiefe gewünscht ist, sollten der Haftklebemasse Zusatzstoffe beigemischt werden, insbesondere Harze und/oder UV-Initiatoren.

Neben den zuvor genannten Bestandteilen können der Haftklebemasse Harze beigemischt sein. Als zuzusetzende klebrigmachende Harze sind ausnahmslos alle vorbekannten und in der Literatur beschriebenen Klebharze einsetzbar, insbesondere solche, die keinen negativen Effekt auf die Transparenz der Klebemasse besitzen. Genannt

seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Zur Verbesserung der Transparenz werden bevorzugt transparente und sehr gut mit dem Polymer verträgliche Harze eingesetzt. Hydrierte oder teilhydrierte Harze weisen häufig diese Eigenschaften auf. Des Weiteren sollte bei der Auswahl der Harze ebenfalls deren Einfluss auf den Brechungsindex berücksichtigt werden. Harze mit hohem hydrierten und aliphatischen Anteil senken eher den Brechungsindex ab, während Harze mit hohem aromatischen Anteil den Brechungsindex ansteigen lassen.

Zusätzlich können der Haftklebemasse auch Vernetzer (c) und Promotoren zur Vernetzung beigemischt werden. Geeignete Vernetzer für die Elektronenstrahlvernetzung und UV-Vernetzung sind beispielsweise bi- oder multifunktionelle Acrylate, bi- oder multifunktionelle Isocyanate (auch in blockierter Form) oder bi- oder multifunktionelle Epoxide. Weiterhin können auch thermisch aktivierbare Vernetzer, wie z.B. Lewis-Säure, Metallchelate oder multifunktionelle Isocyanate zugesetzt sein. Der Anteil der Vernetzer beträgt bevorzugt bis zu 5 Gew.-% bezogen auf die Gesamtpolymermischung.

*Herstellverfahren für die (Meth)acrylathaftklebemassen*

Zur Polymerisation werden die Monomere dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.

Zur Erzielung einer für Haftklebemassen bevorzugten Glasübergangstemperatur $T_G$ der Polymere von $T_G \leq$ 25 °C werden entsprechend dem vorstehend gesagten die Monomere bevorzugt derart ausgesucht und die mengenmäßige Zusammensetzung der Monomermischung vorteilhaft derart gewählt, dass sich nach der Fox-Gleichung (G1)

(vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

In dieser Gleichung repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Zur Herstellung der Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist in Houben Weyl, "Methoden der Organischen Chemie", Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen. Als nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer besonders bevorzugten Ausgestaltung wird als radikalischer Initiator 1,1'-Azo-bis-(cyclohexancarbonsäurenitril) (Vazo 88™ der Fa. DuPont) oder Azodiisobutyronitril (AIBN) verwendet.

Die mittleren Molekulargewichte $M_W$ der bei der radikalischen Polymerisation entstehenden Haftklebemassen werden bevorzugt derart gewählt, dass sie in einem Bereich von 200.000 bis 4.000.000 g/mol liegen; speziell für die weitere Verwendung als Schmelzhaftkleber mit Rückstellvermögen werden Haftklebemassen mit mittleren Molekulargewichten $M_W$ von 400.000 bis 1.400.000 g/mol hergestellt. Die Bestimmung des mittleren Molekulargewichtes erfolgt über Größenausschlusschromatographie (GPC) oder Matrix-unterstützte Laser-Desorption/Ionisations-Massenspektrometrie (MALDI-MS). Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische

Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wässrigen Polymerisationsreaktionen können mit einem mit Wasser mischbaren oder hydrophilen Co-Lösungsmittel versetzt werden, um zu gewährleisten, dass das Reaktionsgemisch während des Monomerumsatzes in Form einer homogenen Phase vorliegt. Vorteilhaft verwendbare Co-Lösungsmittel für die vorliegende Haftklebemasse werden gewählt aus der folgenden Gruppe, bestehend aus: aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Für die Herstellung kann es auch von Vorteil sein, die (Meth)acrylathaftklebemassen in Substanz zu polymerisieren. Hierfür eignet sich insbesondere die Präpolymerisationstechnik. Die Polymerisation wird mit UV-Licht initiiert, aber nur zu einem geringen Umsatz von ca. 10 - 30 % geführt. Anschließend kann dieser Polymersirup z.B. in Folien eingeschweißt werden (im einfachsten Fall Eiswürfel) und dann in Wasser zu hohem Umsatz durchpolymerisiert werden. Diese Pellets lassen sich dann als Acrylatschmelzkleber einsetzen, wobei für den Aufschmelzvorgang besonders bevorzugt Folienmaterialien eingesetzt werden, die mit dem Polyacrylat kompatibel sind. Auch für diese Präparationsmethode lassen sich die thermisch-leitfähigen Materialzusätze vor oder nach der Polymerisation zusetzen.

Ein anderes vorteilhaftes Herstellungsverfahren für die Poly(meth)acrylathaftklebemassen ist die anionische Polymerisation. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird in diesem Fall im Allgemeinen durch die Struktur $P_L$(A)-Me repräsentiert, wobei Me ein Metall der Gruppe I, wie z.B. Lithium, Natrium oder Kalium, und $P_L$(A) ein wachsendes Polymer aus den Acrylatmonomeren ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung keinen Anspruch auf Vollständigkeit hat. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Co-Initiatoren lassen sich ebenfalls einsetzen. Geeignete Co-Initiatoren sind unter anderem Lithiumhalogenide, Alkalimetallalkoxide oder Alkylaluminium-Verbindungen. In einer sehr bevorzugten Version sind die Liganden und Co-Initiatoren so gewählt, dass Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Poly(meth)acrylathaftklebemassen mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt:

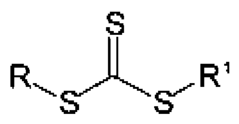
(I)

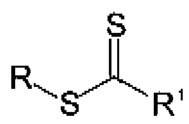
(II)

worin R und $R^1$ unabhängig voneinander gewählt oder gleich sind und

- verzweigte und unverzweigte $C_1$- bis $C_{18}$-Alkylreste; $C_3$- bis $C_{18}$-Alkenylreste; $C_3$-bis $C_{18}$-Alkinyireste;
- $C_1$- bis $C_{18}$-Alkoxyreste
- durch zumindest eine OH-Gruppe oder ein Halogenatom oder einen Silylether substituierte $C_1$- bis $C_{18}$-Alkylreste; $C_3$- bis $C_{18}$-Alkenylreste; $C_3$- bis $C_{18}$-Alkinylrest;
- $C_2$-$C_{18}$-Hetero-Alkylreste mit mindestens einem O-Atom und/oder einer NR*-Gruppe in der Kohlenstoffkette, wobei

R* ein beliebiger (insbesondere organischer) Rest sein kann,

- mit zumindest einer Estergruppe, Amingruppe, Carbonatgruppe, Cyanogruppe, Isocyanogruppe und/oder Epoxidgruppe und/oder mit Schwefel substituierte $C_1$-$C_{18}$-Alkylreste, $C_3$-$C_{18}$-Alkenylreste, $C_3$-$C_{18}$-Alkinylreste;
- $C_3$-$C_{12}$-Cycloalkylreste
- $C_6$-$C_{18}$- Aryl- oder Benzylreste
- Wasserstoff

darstellen.

Kontrollreagenzien des Typs (I) bestehen bevorzugt aus folgenden weiter eingeschränkten Verbindungen:

Halogenatome sind hierbei bevorzugt F, Cl, Br oder I, besonders bevorzugt Cl und Br. Als Alkyl-, Alkenyl- und Alkinylreste in den verschiedenen Substituenten eignen sich hervorragend sowohl lineare als auch verzweigte Ketten.

Beispiele für Alkylreste, welche 1 bis 18 Kohlenstoffatome enthalten, sind: Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.

Beispiele für Alkenylreste mit 3 bis 18 Kohlenstoffatomen sind: Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.

Beispiele für Alkinyl mit 3 bis 18 Kohlenstoffatomen sind: Propinyl, 2-Butinyl, 3-Butinyl, n-2-Octinyl und n-2-Octadecinyl. Beispiele für Hydroxy-substituierte Alkylreste sind Hydroxypropyl, Hydroxybutyl oder Hydroxyhexyl.

Beispiele für Halogen-substituierte Alkylreste sind: Dichlorobutyl, Monobromobutyl oder Trichlorohexyl.

Ein geeigneter $C_2$-$C_{18}$-Hetero-Alkylrest mit mindestens einem O-Atom in der Kohlenstoffkette ist beispielsweise $-CH_2-CH_2-O-CH_2-CH_3$.

Als $C_3$-$C_{12}$-Cycloalkylreste dienen beispielsweise: Cyclopropyl, Cyclopentyl, Cyclohexyl oder Trimethylcyclohexyl.

Als $C_6$-$C_{18}$-Arylreste dienen beispielsweise: Phenyl, Naphthyl, Benzyl, 4-tert.-Butylbenzyl- oder weitere substituierte Phenyle, wie z.B. Ethyl, Toluol, Xylol, Mesitylen, Isopropylbenzol, Dichlorobenzol oder Bromtoluol.

Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien einsetzbar:

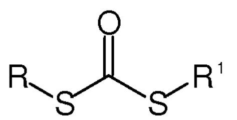

(III)

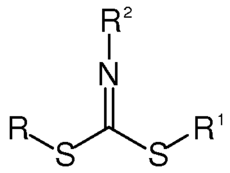

(IV)

wobei $R^2$ ebenfalls unabhängig von R und $R^1$ aus der oben aufgeführten Gruppe für diese Reste gewählt werden kann.

Beim konventionellen 'RAFT-Prozeß' wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflusst, die Restmonomere im Aufkonzentrationsprozess das Lösemittelrecyclat verunreinigen und die entsprechenden Selbstklebebänder ein sehr hohes Ausgasungsverhalten zeigen würden. Um diesen Nachteil niedriger Umsätze zu umgehen, wird in einer besonders bevorzugten Vorgehensweise die Polymerisation mehrfach initiiert.

Als weitere kontrollierte radikalische Polymerisationsmethode können Nitroxid-gesteuerte Polymerisationen durchgeführt werden. Zur Radikalstabilisierung werden in günstiger Vorgehensweise Nitroxide des Typs (Va) oder (Vb) eingesetzt:

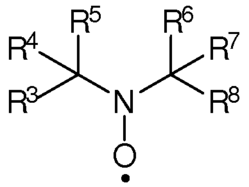

(Va)

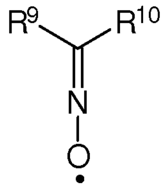

(Vb)

wobei $R^3$, $R^4$, $R^5$, $R^6$, $R^7$, $R^8$, $R^9$, $R^{10}$ unabhängig voneinander folgende Verbindungen oder Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester $-COOR^{11}$, Alkoxide $-OR^{12}$ und/oder Phosphonate $-PO(OR^{13})_2$, wobei $R^{11}$, $R^{12}$ oder $R^{13}$ für Reste aus der Gruppe ii) stehen.

Verbindungen des Typs (Va) oder (Vb) können auch an Polymerketten jeglicher Art gebunden sein (vorrangig in dem Sinne, dass zumindest einer der oben genannten Reste eine derartige Polymerkette darstellt) und somit zum Aufbau von Polyacrylathaftklebemassen genutzt werden.

Weiter bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxy pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

Eine Reihe weiterer Polymerisationsmethoden, nach denen die Haftklebemassen in alternativer Vorgehensweise hergestellt werden können, lassen sich aus dem Stand der Technik wählen: US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im Allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten.

Als weitere kontrollierte Polymerisationsmethode lässt sich in vorteilhafter Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

*Temporärer Träger*

Als temporärer Träger für die Haftklebemasse wird diese bevorzugt auf einem Trennliner (Release) beschichtet oder kaschiert. Als Trennpapiere eignen sich insbesondere Glassine-, HDPE- oder LDPE-Liner, die in einer bevorzugten Auslegung eine Silikonisierung als Trennlage aufweisen. In einer sehr bevorzugten Auslegung der Erfindung wird ein Folientrennliner eingesetzt. Der Folientrennliner sollte in einer sehr bevorzugten Auslegung eine Silikonisierung als Trennmittel aufweisen. Des Weiteren sollte der Folientrennliner eine extrem glatte Oberfläche sowie für den Fall der UV-Vernetzung möglichst eine geringe UV-Licht Absorption aufweisen. Bevorzugt werden antiblockmittelfreie PET-Folien in Kombination von Silikonsystemen, die aus Lösung beschichtet wurden, eingesetzt.

Im Falle der Verwendung permanenter Träger eignen sich als Träger- und Stabilisierungsfolie insbesondere Folien, die ebenfalls einen hohen Brechungsindex $n_d$ von größer 1,43 bei 20°C besitzen.

*Beschichtungsverfahren, Herstellung des Haftklebemassenfilms*

Zur Herstellung wird in einer bevorzugten Auslegung die Haftklebemasse aus Lösung auf den temporären Träger beschichtet.

Gegebenenfalls kann auch auf einer Trägerfolie beschichtet werden. Als Trägerfolie lassen sich z.B. einsetzen, filmische Folien, wie z.B. PET, PEN, Polyimid, PP, PE oder PVC, Vliese, Gewebe sowie alle dem Fachmann bekannten Trägermaterialien für doppelseitige Klebebänder.

Zur Vorbehandlung der Trägermaterialien kann z.B. mit Corona oder mit Plasma vorbehandelt werden, es kann aus der Schmelze oder aus Lösung ein Primer aufgetragen werden oder es kann chemisch geätzt werden.

Für die Beschichtung der Haftklebemasse aus Lösung wird über Wärmezufuhr z.B. in einem Trockenkanal das Lösemittel entfernt.

Die oben beschriebenen Polymere können weiterhin auch als Hotmelt-Systeme (also aus der Schmelze) beschichtet werden. Für das Herstellungsverfahren kann es daher erforderlich sein, das Lösemittel von der Haftklebemasse zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt < 1 %, weiter bevorzugt < 0,5 % und besonders bevorzugt < 0,2 %. Der Hotmelt wird aus der Schmelze weiterverarbeitet.

Zur Beschichtung als Hotmelt können unterschiedliche Beschichtungsverfahren herangezogen werden. In einer Ausführung werden die Haftklebemassen über ein Walzenbeschichtungsverfahren beschichtet. Unterschiedliche Walzenbeschichtungsverfahren sind im "Handbook of Pressure Sensitive Adhesive Technology" von Donatas Satas (van Nostrand, New York 1989) beschrieben. In einer weiteren Ausführung wird über eine Schmelzdüse beschichtet. In einem weiteren bevorzugten Verfahren wird durch Extrusion beschichtet. Die Extrusionsbeschichtung wird bevorzugt mit einer Extrusionsdüse vorgenommen. Die verwendeten Extrusionsdüsen können vorteilhaft aus einer der drei folgenden Kategorien stammen: T-Düse, Fischschwanz-Düse und Bügel-Düse. Die einzelnen Typen unterscheiden sich durch die Gestalt ihres Fließkanals. Durch die Beschichtung können die Haftklebemassen auch eine Orientierung erfahren.

Unabhängig vom Beschichtungsverfahren beträgt der Haftklebemassenauftrag in bevorzugter Ausgestaltung zwischen 25 und 250 $g/m^2$, weiter bevorzugt zwischen 50 und 150 $g/m^2$.

*Elektronenstrahlhärtung*

Für die Herstellung des Vernetzungsprofils und der Einstellung der verschiedenen Klebkräfte wird in einer Ausführungsform mit Elektronenstrahlen gehärtet. Sofern diese Art der Vernetzung beabsichtigt ist, ist ein Photoinitiator in der Klebemasse nicht zwingend erforderlich. In diesem Fall beträgt der Anteil des Photoinitiators also bevorzugt 0%.

Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London.

Für die Umsetzung der gewünschten Eigenschaften der Haftklebemasse, muss in Abhängigkeit von der Schichtdicke der Haftklebeschicht die Beschleunigungsspannung bzw. die Streudosis gewählt werden. Generell kann man mehrere Dickenbereiche (Masseauftrag) der Haftklebemasseschicht unterscheiden: 25 - 50 $g/m^2$, 51 - 100 $g/m^2$, 101 bis 175 $g/m^2$ sowie 176 - 250 $g/m^2$ unterscheiden.

Für Haftklebemassen mit einem Masseauftrag von 25 - 50 $g/m^2$ werden bevorzugt Beschleunigungsspannun-

gen von 20 - 40 kV und Streudosen von 20 bis 80 kGy eingesetzt.

Für Haftklebemassen mit einem Masseauftrag von 51 - 100 g/m$^2$ werden bevorzugt Beschleunigungsspannungen von 40 - 80 kV und Streudosen von 40 bis 100 kGy eingesetzt.

Für Haftklebemassen mit einem Masseauftrag von 101 - 175 g/m$^2$ werden bevorzugt Beschleunigungsspannungen von 60 - 100 kV und Streudosen von 40 bis 100 kGy eingesetzt.

Für Haftklebemassen mit einem Masseauftrag von 176 - 250 g/m$^2$ werden bevorzugt Beschleunigungsspannungen von 80 - 140 kV und Streudosen von 40 bis 100 kGy eingesetzt.

Die angegebenen Dosen gelten für 23°C Umgebungstemperatur und Bestrahlung unter $N_2$ Atmosphäre. Es wird in einem Geschwindigkeitsfenster zwischen 5 und 40 m/min bestrahlt.

*UV-Bestrahlung,*

Zur UV-Vernetzung wird mittels kurzwelliger ultravioletter Bestrahlung in einem Wellenlängenbereich von 100 bis 400 nm bestrahlt (UV-A: 315-380 nm; UV-B: 280-315 nm; UV-C: 100-280 nm). Für die geeignete Umsetzung hat die Zusammensetzung der Haftklebemasse einen entscheidenden Einfluss auf das Vernetzungsverhalten. Generell sollte, wenn ein UV-Photoinitiator als Comonomer oder als Additiv eingesetzt wird, bevorzugt mit der Wellenlänge eingestrahlt werden, auf die der Photoinitiator am effizientesten reagiert. Es kann aber auch von Vorteil sein, mit abweichenden Wellenlängen einzustrahlen, um ein stärker ausgeprägteres Vernetzungsprofil zu erhalten.

Bevorzugt erfolgt die UV-Bestrahlung unter Verwendung von Quecksilber-Hochdruck- oder -Mitteldruck-Lampen, die eine Leistung von 80 bis 400 W/cm aufweisen können.

Je nach Art der Bestrahlung, ist es nicht unbedingt notwendig, dass die Haftklebemasse einen Photoinitiator enthält. Dessen Anteil kann also insbesondere auch 0% betragen. Für Haftklebemassen, die keinen Photoinitiator enthalten, wird besonders bevorzugt mit UV-C Licht, insbesondere im Bereich von ca. 220 - 280 nm eingestrahlt, welches eine UV-C Dosis von mindestens 150 mJ/cm$^2$ aufweist. Die Dosis wurde mit einem UV-Dosimeter der Firma Eltosch gemessen.

In Analogie zur Elektronenstrahlhärtung kann die erforderliche Dosis wiederum abhängig vom Masseauftrag sein. Generell gilt, dass mit steigender Dosis eine höhere Differenzierung zwischen der zur UV-Quelle gerichteten und der abgewandten Seite der Haftklebeschicht erreicht werden kann. Die zur UV-Quelle gerichtete Seite verliert mit steigender UV-Dosis immer mehr an Haftklebrigkeit und die Differenzierung zwischen beiden Haftklebemassenseiten wird immer stärker ausgeprägt. Diese Vorgehensweise ist besonders von Vorteil, da hiermit sehr starke Differenzierungen erreicht werden können und keine UV-Photoinitiator hinzugesetzt sind, die das Alterungsverhalten der Haftklebemasse im Hinblick auf Transmission oder Haze über einen längeren Zeitraum negativ beeinflussen könnten.

Sehr gute Ergebnisse werden mit einer UV-C Dosis von größer 250 mJ/cm$^2$ erzielt. Die UV-C Dosis sollte aber eine Dosis von 500 mJ/cm$^2$ nicht übersteigen, da ansonsten eine zu starke Vernetzung auftritt und die Haftklebemasse vollständig an Haftung verliert.

Für Harz-haltige Haftklebemassen kann es jedoch erforderlich sein, mit höheren UV-Dosen zu vernetzen, da insbesondere Harze mit Aromatenanteilen UV-Licht absorbieren können und somit die Vernetzungstendenz reduzieren.

Generell kann für die UV-Vernetzung zwischen 3 Masseauftragsklassen differenziert werden.

Für Haftklebemassen ohne UV-Photoinitiator und mit bis zu 75 g/m$^2$ wird bevorzugt eine UV-C Dosis von maximal 400 mJ/cm$^2$ und minimal 250 mJ/cm$^2$ eingesetzt.

Für Haftklebemassen ohne UV-Photoinitiator und von 76 g/m$^2$ bis zu 150 g/m$^2$ wird bevorzugt eine UV-C Dosis von maximal 450 mJ/cm$^2$ und minimal 300 mJ/cm$^2$ eingesetzt.

Für Haftklebemassen ohne UV-Photoinitiator und von 151 g/m$^2$ bis zu 250 g/m$^2$ wird bevorzugt eine UV-C Dosis von maximal 500 mJ/cm$^2$ und minimal 350 mJ/cm$^2$ eingesetzt.

Für alle Varianten kann gegebenenfalls zusätzlich UV-A oder UV-B Strahlung verwendet werden, um eine zusätzliche Vernetzung in tieferen Schichten zu erreichen.

Die Dosis kann durch die Leistung des UV-Strahlers variiert werden oder auch durch die Bestrahlungszeit, die wiederum durch die Bahngeschwindigkeit gesteuert wird. Die Bahngeschwindigkeit für eine UV-Vernetzung beträgt bevorzugt zwischen 1 und 50 m/min, je nach Bestrahlungsintensität des UV-Strahlers. Für die UV-Vernetzung kann es angebracht sein, die Strahlerleistung der Bahngeschwindigkeit, mit der das laminierte Material durch den Strahlungsbereich geführt wird, anzupassen.

Um die Vernetzungsreaktion der UV-vernetzten Klebemasse zu forcieren, wird bevorzugt mit harter UV-C Strahlung in einem Wellenlängenbereich kleiner als 300 nm bestrahlt. Die hauptsächliche Verwendung von harter UV-C-Strahlung führt zu einer hohen Vernetzungsausbeute auf der Haftklebemassenoberfläche. Tiefere Haftklebemasseschichten werden durch die Bestrahlung mit kurzer Wellenlänge weniger stark vernetzt. Dennoch kann in der UV-Bestrahlung für das erfinderische Verfahren neben der UV-C-Strahlung auch Anteile von UV-A und UV-B Strahlung enthalten sein. Zusätzlich kann unter Ausschluss von Luftsauerstoff bestrahlt werden. Hierfür kann die Haftklebeschicht vor der UV-Bestrahlung abgedeckt werden oder der Bestrahlungskanal wird mit einem Inertgas, wie z.B. Stickstoff,

geflutet.

Besonders bevorzugt werden für Haftklebemassen ohne UV-Photoinitiatoren UV-Strahler eingesetzt, die mit mindestens 50 %, sehr bevorzugt mit 70 % ihrer Emission in einem Wellenlängenbereich von kleiner 300 nm, weiter bevorzugt zwischen 250 und 300 nm, also im UV-C-Bereich, operieren. Derartige UV-Strahlungsgeräte stellen beispielsweise die Firmen Eltosch, Fusion and IST her. Ferner kann ein dotiertes Glas eingesetzt werden, um den Strahlenbereich von größer 300 nm herauszufiltern.

Weiterhin kann die UV-bestrahlte Haftklebemasse optional kurzzeitig zusätzlich erhitzt werden. Der Wärmeeintrag kann während der UV-Bestrahlung und UV-Vernetzung erfolgen, oder durch Bestrahlung mit z. B. zusätzlicher UV-Strahlung oder IR- oder Mikrowellenstrahlung. Die Bestrahlungseinrichtungen sind vorteilhaft mit einer Absaugvorrichtung gekoppelt. Die Haftklebemasse wird bevorzugt durch IR-Bestrahlung im Wellenzahlbereich um 1700 $cm^{-1}$ erhitzt, wobei die Temperatur der Haftklebemasse zumindest 100°C, bevorzugt 120°C oder höher beträgt, dabei aber einen oberen Grenzwert von 170°C nicht überschreiten sollte. Hierdurch wird die Vernetzungsreaktion nochmals gefördert und die Haftklebemasse verliert an den UV-bestrahlten Stellen weiter an Klebkraft.

<u>Prüfmethoden</u>

<u>A. Transmission + Haze</u>

Die Bestimmung der Transmission und des Haze erfolgte nach ASTM D1003. Vermessen wurde ein Verbund aus optisch transparentem Klebeband und Glasplatte.

<u>B. Klebkraft</u>

Die Prüfung der Schälfestigkeit (Klebkraft) erfolgte gemäß PSTC-1. Das Klebeband wird auf eine Glasplatte aufgebracht. Ein 2 cm breiter Streifen des Klebebandes wird durch dreimaliges doppeltes Überrollen mittels einer 2 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen. Die Kraft wird in N/cm angegeben. Es werden jeweils beide Haftklebemassenseiten getestet.

<u>UV-Bestrahlung</u>

Zur UV-Bestrahlung wurde eine UV-Anlage der Fa. Eltosch verwendet. Die Anlage ist ausgerüstet mit einem Hg-UV-Mitteldruckstrahler mit einer Intensität von 120 W/cm. Die Lappenmuster wurden jeweils mit einer Geschwindigkeit von 20 m/min durch die Anlage gefahren, wobei zur Erhöhung der Bestrahlungsdosis die Muster in mehreren Durchgängen bestrahlt wurden. Die UV-Dosis wurde mit dem Power-Puck der Fa. Eltosch gemessen. Die Dosis eines Bestrahlungsdurchganges betrug ca. 140 $mJ/cm^2$ im UV-B Bereich und 25 $mJ/cm^2$ im UV-C Bereich. Zur Reduzierung des UV-C Bereiches kann ferner noch ein dotiertes Glas eingesetzt werden.

<u>ESH-Bestrahlung</u>

Für die Elektronenbestrahlung erfolgte die Vernetzung mit einem Gerät der Fa. Electron Crosslinking AB, Halmstad, Schweden. Das beschichte Haftklebeband wurde dabei über eine standardmäßig vorhandene Kühlwalze unter dem Lenard-Fenster des Beschleunigers hindurch geführt. Dabei wurde in der Bestrahlungszone der Luftsauerstoff durch Spülen mit reinem Stickstoff verdrängt. Die Bahngeschwindigkeit betrug jeweils 10 m/min. Es wurden Bestrahlungsspannung und Streudosen variiert.

<u>Herstellung_Polymer_1_(Reinacrylat):</u>

Für die Polymerisation wurden von Stabilisatoren gereinigte Monomere eingesetzt. Ein für radikalische Polymerisationen konventioneller 2 L-Glasreaktor wurde mit 32 g Acrylsäure, 168 g n-Butylacrylat, 200 g 2-Ethylhexylacrylat, und 300 g Aceton/Isopropanol (97:3) befüllt. Nach 45 Minuten Durchleiten von Stickstoffgas unter Rühren wurde der Reaktor auf 58°C hochgeheizt und 0,2 g Vazo67® (2,2'-Azodi(methylbutyronitril), Fa. DuPont) hinzu gegeben. Anschließend wurde das äußere Heizbad auf 75°C erwärmt und die Reaktion konstant bei dieser Außentemperatur durchgeführt. Nach 1 h Reaktionszeit wurde wiederum 0,2 g Vazo67® (2,2'-Azodi(methylbutyronitril), Fa. DuPont) hinzu gegeben. Nach 3 und 6 h wurde mit jeweils 150 g Aceton/Isopropanol-Gemisch verdünnt. Zur Reduktion der Restinitiatoren wurden nach 8 und 10 h jeweils 0,4 g Perkadox 16® (Di-(4-tert-butylcyclohexyl)peroxydicarbonat) Fa. Akzo Nobel) hinzu gegeben. Die Reaktion wurde nach 22 h Reaktionszeit abgebrochen und auf Raumtemperatur abgekühlt.

Herstellung des Polymer 2 (Harz.modifiziertes Polyacrylat):

Für die Polymerisation wurden von Stabilisatoren gereinigte Monomere eingesetzt. Ein für radikalische Polymerisationen konventioneller 2 L-Glasreaktor wurde mit 50 g Acrylsäure, 175 g n-Butylacrylat, 175 g 2-Ethylhexylacrylat, und 300 g Aceton/Isopropanol (97:3) befüllt. Nach 45 Minuten Durchleiten von Stickstoffgas unter Rühren wurde der Reaktor auf 58°C hochgeheizt und 0,2 g Vazo67® (2,2'-Azodi(methylbutyronitril), Fa. DuPont) hinzu gegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g Vazo67® (2,2'-Azodi(methylbutyronitril), Fa. DuPont) hinzu gegeben. Nach 3 und 6 h wurde mit jeweils 150 g Aceton/Isopropanol-Gemisch verdünnt. Zur Reduktion der Restinitiatoren wurden nach 8 und 10 h jeweils 0,4 g Perkadox 16® (Di-(4-tert-butylcyclohexyl)peroxydicarbonat) Fa. Akzo Nobel) hinzu gegeben. Die Reaktion wurde nach 22 h Reaktionszeit abgebrochen und auf Raumtemperatur abgekühlt. Anschließend wurden 25 Gew.-% (bezogen auf das Polymer) eines Styrolharzes (FTR 6100 der Firma Mitsui Petrochemical Industries) und 2 Gew.-% Genomer 4212® (Polyurethandiacrylat der Fa. Rahn) hinzu gegeben und mit Aceton ein Feststoffgehalt von 30 % eingestellt. Die Lösung war klar und transparent.

Herstellung Polymer 3 (Reinacrylat mit UV-Photoinitiator):

Für die Polymerisation wurden von Stabilisatoren gereinigte Monomere eingesetzt. Ein für radikalische Polymerisationen konventioneller 2 L-Glasreaktor wurde mit 32 g Acrylsäure, 168 g n-Butylacrylat, 200 g 2-Ethylhexylacrylat, und 300 g Aceton/Isopropanol (97:3) befüllt. Nach 45 Minuten Durchleiten mit Stickstoffgas unter Rühren wurde der Reaktor auf 58°C hochgeheizt und 0,2 g Vazo67® (2,2'-Azodi(methylbutyronitril), Fa. DuPont) hinzu gegeben. Anschließend wurde das äußere Heizbad auf 75°C erwärmt und die Reaktion konstant bei dieser Außentemperatur durchgeführt. Nach 1 h Reaktionszeit wurde wiederum 0,2 g Vazo67® (2,2'-Azodi(methylbutyronitril), Fa. DuPont) hinzugegeben. Nach 3 und 6 h wurde mit jeweils 150 g Aceton/Isopropanol-Gemisch verdünnt. Zur Reduktion der Restinitiatoren wurden nach 8 und 10 h jeweils 0,4 g Perkadox 16® (Di-(4-tert-butylcyclohexyl)peroxydicarbonat) Fa. Akzo Nobel) hinzu gegeben. Die Reaktion wurde nach 22 h Reaktionszeit abgebrochen und auf Raumtemperatur abgekühlt. Anschließend wurden 0,5 Gew.-% Esacure KIP 150™ (Fa. Lamberti) hinzugegeben und mit Aceton ein Feststoffgehalt von 30 % eingestellt. Die Lösung war klar und transparent.

UV-Photoinitiator Esacure™ KIP 150: α-Hydroxyketon Oligo[2-hydroxy-2-methyl-1-[4-(1-methylvinyl)phenyl] propanon]

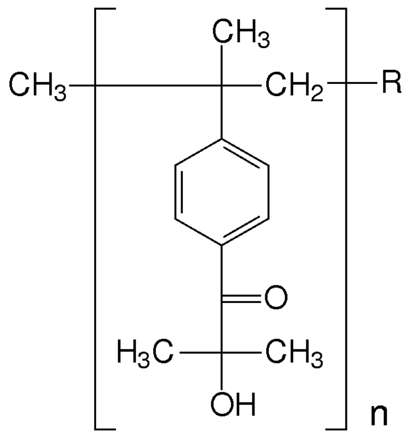

Herstellung des Polymer 4 (Harz.modifiziertes Polyacrylat mit UV-Photoinitiator:

Für die Polymerisation wurden von Stabilisatoren gereinigte Monomere eingesetzt. Ein für radikalische Polymerisationen konventioneller 2 L-Glasreaktor wurde mit 50 g Acrylsäure, 175 g n-Butylacrylat, 175 g 2-Ethylhexylacrylat, und 300 g Aceton/Isopropanol (97:3) befüllt. Nach 45 Minuten Durchleiten mit Stickstoffgas unter Rühren wurde der Reaktor auf 58°C hochgeheizt und 0,2 g Vazo67® (2,2'-Azodi(methylbutyronitril), Fa. DuPont) hinzu gegeben. Anschließend wurde das äußere Heizbad auf 75°C erwärmt und die Reaktion konstant bei dieser Außentemperatur durchgeführt. Nach 1 h Reaktionszeit wurde wiederum 0,2 g Vazo67® (2,2'-Azodi(methylbutyronitril), Fa. DuPont) hinzugegeben. Nach 3 und 6 h wurde mit jeweils 150 g Aceton/Isopropanol-Gemisch verdünnt. Zur Reduktion der Restinitiatoren wurden nach 8 und 10 h jeweils 0,4 g Perkadox 16® (Di-(4-tert-butylcyclohexyl)peroxydicarbonat) Fa. Akzo Nobel) hinzugegeben. Die Reaktion wurde nach 22 h Reaktionszeit abgebrochen und auf Raumtemperatur abgekühlt. Anschließend wurden 20 Gew.-% (bezogen auf das Polymer) eines Styrolharzes (FTR 6100 der Firma Mitsui Petrochemical Industries) und

0,75 Gew.-% Esacure KIP 150™ (Fa. Lamberti) hinzugegeben und mit Aceton ein Feststoffgehalt von 30 % eingestellt. Die Lösung war klar und transparent.

Herstellung der Haftklebemassenfilme:

Die Polymere 1 - 4 wurden aus Lösung auf eine 75 μm dicke silikonisierte PET-Folie aufgetragen. Hierfür wurde ein Rakel verwendet. Durch den Abstand des Rakels zur silikonisierten PET-Folie wurde der Masseauftrag variiert. Anschließend wurden die beschichteten Muster bei Raumtemperatur für 2 h gelüftet. Dann erfolgte bei 120°C und 10 Minuten Verweilzeit im Umluftofen die vollständige Trocknung und Befreiung von den Restlösemitteln.

Beispiele

Beispiel 1

Das Polymer 1 wurde mit 100 g/m$^2$ auf die silikonisierte PET Folie beschichtet.

Beispiel 2

Das Polymer 1 wurde mit 150 g/m$^2$ auf die silikonisierte PET Folie beschichtet.

Beispiel 3

Das Polymer 2 wurde mit 75 g/m$^2$ auf die silikonisierte PET Folie beschichtet.

Beispiel 4

Das Polymer 2 wurde mit 100 g/m$^2$ auf die silikonisierte PET Folie beschichtet. Vergleichsbeispiel 5
Das Polymer 3 wurde mit 50 g/m$^2$ auf die silikonisierte PET Folie beschichtet. Vergleichsbeispiel 6
Das Polymer 3 wurde mit 100 g/m$^2$ auf die silikonisierte PET Folie beschichtet. Vergleichsbeispiel 7
Das Polymer 4 wurde mit 50 g/m$^2$ auf die silikonisierte PET Folie beschichtet. Vergleichsbeispiel 8
Das Polymer 4 wurde mit 100 g/m$^2$ auf die silikonisierte PET Folie beschichtet.

**Ergebnisse:**

Zunächst wurden die verschiedenen Beispiele unterschiedlichen Dosen UV und ESH Strahlung ausgesetzt. UV und Elektronenstrahlen sind die gängigsten Formen aktinischer Strahlung. Die applizierten Strahlungen sind in der folgenden Tabellen aufgelistet. In Tabelle 1 sind alle Beispiele mit UV-Bestrahlung dargestellt.

Tabelle 1

| **Beispiel** | **UV-C Dosis in mJ/cm$^2$** | **UV-B Dosis in mJ/cm$^2$** |
|---|---|---|
| 1UV | 320 | 1792 |
| 1UVReferenz1 | 800 | 4480 |
| 1UVReferenz2 | 50 | 280 |
| 5UV | 15 | 100 |
| 5UVReferenz1 | 0 | 70 |
| 5UVReferenz2 | 800 | 4480 |
| 6UV | 75 | 420 |
| 6UVReferenz1 | 25 | 140 |
| 6UVReferenz2 | 800 | 4480 |
| 7UV | 25 | 140 |
| 7UVReferenz1 | 0 | 70 |

(fortgesetzt)

| Tabelle 1 | | |
|---|---|---|
| **Beispiel** | **UV-C Dosis in mJ/cm$^2$** | **UV-B Dosis in mJ/cm$^2$** |
| 7UVReferenz2 | 800 | 4480 |
| 8UV | 75 | 420 |
| 8UVReferenz1 | 25 | 140 |
| 8UVReferenz2 | 800 | 4480 |

In Tabelle 2 sind alle Beispiele mit ESH-Bestrahlung dargestellt.

| Tabelle 2 | | |
|---|---|---|
| **Beispiel** | **Beschleunigungsspannung in kV** | **Streudosis kGy** |
| 1ES | 60 | 40 |
| 1ESReferenz1 | 180 | 40 |
| 1ESReferenz2 | 180 | 10 |
| 2ES | 60 | 40 |
| 2ESReferenz1 | 180 | 40 |
| 2ESReferenz2 | 180 | 80 |
| 3ES | 60 | 60 |
| 3ESReferenz1 | 180 | 20 |
| 3ESReferenz2 | 180 | 60 |
| 4ES | 60 | 60 |
| 4ESReferenz1 | 180 | 20 |
| 4ESReferenz2 | 180 | 60 |

Zur Überprüfung der optischen Eigenschaften wurde zunächst von allen Mustern Transmissions- und Hazemessungen durchgeführt. Die Ergebnisse sind in Tabelle 3 dargestellt:

| Tabelle 3 | | |
|---|---|---|
| **Beispiel** | **Transmission [%]** | **Haze [%]** |
| 1UV | 99,0 | 0,85 |
| 1UVReferenz1 | 99,0 | 0,85 |
| 1UVReferenz2 | 99,0 | 0,85 |
| 5UV | 98,7 | 1,02 |
| 5UVReferenz1 | 98,6 | 1,13 |
| 5UVReferenz2 | 98,6 | 1,09 |
| 6UV | 98,5 | 1,25 |
| 6UVReferenz1 | 98,5 | 1,28 |
| 6UVReferenz2 | 98,4 | 1,31 |
| 7UV | 97,9 | 1,08 |
| 7UVReferenz1 | 97,9 | 1,05 |

(fortgesetzt)

| Tabelle 3 | | |
|---|---|---|
| **Beispiel** | **Transmission [%]** | **Haze [%)** |
| 7UVReferenz2 | 97,5 | 1,14 |
| 8UV | 97,6 | 1,41 |
| 8UVReferenz1 | 97,7 | 1,38 |
| 8UVReferenz2 | 97,0 | 1,48 |
| 1ES | 99,0 | 0,85 |
| 1ESReferenz1 | 98,2 | 1,32 |
| 1ESReferenz2 | 98,8 | 1,03 |
| 2ES | 98,8 | 1,10 |
| 2ESReferenz1 | 98,4 | 1,22 |
| 2ESReferenz2 | 98,7 | 1,16 |
| 3ES | 97,1 | 1,46 |
| 3ESReferenz1 | 96,8 | 1,48 |
| 3ESReferenz2 | 96,5 | 1,52 |
| 4ES | 95,7 | 1,64 |
| 4ESReferenz1 | 95,4 | 1,72 |
| 4ESReferenz2 | 95,0 | 1,78 |

Die gemessenen Daten belegen, dass sowohl die Transmission als auch der Haze-Wert optisch hochtransparente Anforderungen erfüllen kann. So liegen alle Transmissionswerte oberhalb 90 % (korrigiert / nach Abzug der Luftreflektion) sowie der Haze-Wert unterhalb der 5 % Marke. Auch die stärker oder weniger stark bestrahlten Referenzmuster erfüllen diese Anforderungen.

Zur Überprüfung der klebtechnischen Eigenschaften wurden von allen Mustern die Klebkräfte sowohl auf der bestrahlten Seite als auch auf der abgewandten Seite gemessen. Die Ergebnisse sind in der Tabelle 4 dargestellt.

| Tabelle 4 | | |
|---|---|---|
| **Beispiel** | **Klebkraft in [N/cm] Strahlenseite** | **Klebkraft in [N/cm] Strahlen abgewandte Seite** |
| 1UV | 3,0 | 6,8 |
| 1UVReferenz1 | <0.1 | 3,2 |
| 1UVReferenz2 | 6,6 | 6,9 |
| 5UV | 5,7 | 2,9 |
| 5UVReferenz1 | 2,9 | 2,8 |
| 5UVReferenz2 | <0.1 | 2,1 |
| 6UV | 8,9 | 5,2 |
| 6UVReferenz1 | 5,0 | 4,7 |
| 6UVReferenz2 | <0.1 | 3,6 |
| 7UV | 7,2 | 3,3 |
| 7UVReferenz1 | 3,5 | 3,2 |
| 7UVReferenz2 | <0.1 | 3,1 |
| 8UV | 11,3 | 6,4 |

(fortgesetzt)

| Tabelle 4 | | |
|---|---|---|
| **Beispiel** | **Klebkraft in [N/cm] Strahlenseite** | **Klebkraft in [N/cm] Strahlen abgewandte Seite** |
| 8UVReferenz1 | 5,7 | 6,3 |
| 8UVReferenz2 | <0.1 | 4,0 |
| 1ES | 4,9 | 8,3 |
| 1ESReferenz1 | 5,4 | 5,0 |
| 1ESReferenz2 | 7,4 | 7,9 |
| 2ES | 9,2 | 14,3 |
| 2ESReferenz1 | 9,5 | 9,7 |
| 2ESReferenz2 | 8,6 | 8,3 |
| 3ES | 8,4 | 12,2 |
| 3ESReferenz1 | 11,4 | 11,7 |
| 3ESReferenz2 | 8,2 | 8,5 |
| 4ES | 9,3 | 13,1 |
| 4ESReferenz1 | 12,5 | 12,9 |
| 4ESReferenz2 | 10,7 | 10,3 |

Der Tabelle 4 kann entnommen werden, dass die erfinderischen Beispiele 1 bis 4 als auch die Vergleichsbeispiele 5 bis 8 alle eine klare

Differenzierung der Klebkräfte aufweisen. Bei den Referenzbeispielen gibt es dagegen zwei unterschiedliche Fälle. So existieren Muster, die nahezu homogen vernetzt sind und somit kaum unterschiedliche Klebkräfte aufweisen, als auch Muster, die oberflächlich so stark vernetzt wurden, dass nahezu keine Klebkraft mehr vorhanden ist. Wählt man dagegen den richtigen Dosisbereich in Abhängigkeit vom Haftklebmassenauftrag, so kann eine Differenzierung unter Beibehaltung der optischen Eigenschaften erreicht werden. Diese Muster können dann z.B. für reversible Anwendungen eingesetzt werden. Zudem zeigt die Tabelle 4, dass sehr unterschiedliche Klebkraftniveaus erreicht werden können.

## Patentansprüche

**1.** Verwendung eines Transfer-Haftklebebandes zur Verklebung optischer Bauteile, wobei das Transferklebeband als trägerloses Klebeband mit einer Klebeschicht enthaltend eine Haftklebemasse basierend auf einem Poly(meth)acrylatcopolymer mit folgenden Monomeren:

a1) Acrylsäure und/oder Acrylsäureester der folgenden Formel:

$$CH_2 = C(R^1)(COOR^2),$$

wobei $R^1$ = H oder $CH_3$ und $R^2$ eine Alkylkette mit 1 - 30 C-Atomen ist,
a2) olefinisch ungesättigte Monomere mit funktionellen Gruppen,
wobei Monomere der Gruppe a1) zu mindestens 50 Gew.-% bezogen auf die Gesamtkomponente (a) enthalten sind,
wobei Monomere der Gruppe a2) zu 0 - 30 Gew.-%, bezogen auf die Gesamtkomponente (a) enthalten sind,

ausgebildet ist,
wobei die Haftklebemasse durch aktinische Strahlung an Oberseite und Unterseite unterschiedlich stark vernetzt ist und wobei die Haftklebemasse derart vernetzt ist, dass diese sowohl an ihrer Oberseite als auch an ihrer Unterseite auf einer Glasplatte eine Klebkraft nach PSTC-1 von mindestens 1 N/cm aufweist und eine Klebkraftdifferenz zwischen der Klebkraft an der Oberseite und an der Unterseite von mindestens 30%, vorzugsweise von mindestens

50%, bezogen auf die niedrigere der beiden Klebkräfte, **dadurch gekennzeichnet, dass** die Haftklebemasse frei von Photoinitiatoren ist.

## Claims

**1.** The use of a pressure-sensitive adhesive transfer tape for bonding optical components, the adhesive transfer tape being in the form of a backingless adhesive tape having an adhesive layer comprising an adhesive composition based on a poly(meth)acrylate copolymer with the following monomers:

a1) acrylic acid and/or acrylic esters of the following formula:

$$CH_2 = C(R^1)(COOR^2),$$

where $R^1$ is H or $CH_3$ and $R^2$ is an alkyl chain having 1 - 30 C atoms,
a2) olefinically unsaturated monomers having functional groups where monomers of group a1) are present at not less than 50% by weight, based on the total component (a), and where monomers of group a2) are present at 0% - 30% by weight, based on the total component (a),

the pressure-sensitive adhesive being crosslinked to different extents on top face and bottom face by actinic radiation and the crosslinking of the pressure-sensitive adhesive being such that both on its top face and on its bottom face it has a PSTC-1 bond strength of at least 1 N/cm on a glass plate and a bond strength difference between the top-face and bottom-face bond strengths of at least 30%, preferably of at least 50%, based on the lower of the two bond strengths, **characterized in that** the pressure-sensitive adhesive is free of photoinitiators.

## Revendications

**1.** Utilisation d'un ruban adhésif de transfert sensible à la pression pour le collage de composants optiques, le ruban adhésif de transfert étant configuré sous la forme d'un ruban adhésif sans support comprenant une couche adhésive qui contient une masse adhésive sensible à la pression à base d'un copolymère de poly(méth)acrylate comprenant les monomères suivantes :

a1) de l'acide acrylique et/ou un ester de l'acide acrylique de la formule suivants :

$$CH_2=C(R^1)(COOR^2)$$

dans laquelle $R^1$ = H ou $CH_3$ et $R^2$ = une chaîne alkyle de 1 à 30 atomes C,
a2) des monomères oléfiniquement insaturés contenant des groupes fonctionnels,

les monomères du groupe a1) étant contenus à hauteur d'au moins 50 % en poids par rapport à la totalité du composant (a),
les monomères du groupe a2) étant contenus à hauteur de 0 à 30 % en poids par rapport à la totalité du composant (a),
la masse adhésive sensible à la pression étant réticulée par un rayonnement actinique en une puissance différente sur le côté supérieur et le côté inférieur,
et la masse adhésive sensible à la pression étant réticulée de sorte que celle-ci présente aussi bien sur son côté supérieur que sur son côté inférieur une force d'adhérence sur une plaque en verre selon PSTC-1 d'au moins 1 N/cm, et une différence de force d'adhérence entre la force d'adhérence sur le côté supérieur et sur le côté inférieur d'au moins 30 %, de préférence d'au moins 50 %, par rapport à la plus faible des deux forces d'adhérence,
**caractérisée en ce que**
la masse adhésive sensible à la pression est exempte de photoinitiateurs.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20040191509 A1
- US 20030232192 A1
- DE 4316317 C2
- DE 10163545 A1
- DE 102006019219 A
- EP 628616 A
- WO 2008005782 A
- JP 2006299053 A
- WO 9801478 A1
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A


### In der Beschreibung aufgeführte Nicht-Patentliteratur


- **J. BRANDRUP ; E.H. IMMERGUT ; E.A. GRULKE.** Polymer Handbook. John Wiley & Sons, Inc,
- **VON DONATAS SATAS.** Handbook of Pressure Sensitive Adhesive Technology. van Nostrand, 1989
- **DONATAS SATAS.** Handbook of Pressure Sensitive Adhesive Technology. van Nostrand, 1989
- **T.G. FOX.** *Bull. Am. Phys. Soc.,* 1956, vol. 1, 123
- **HOUBEN WEYL.** *Methoden der Organischen Chemie,* vol. E 19a, 60-147
- *Macromolecules,* 1995, vol. 28, 7886
- Chemistry and Technology of UV and EB formulation for Coatings, Inks and Paints. Electron Beam Processing. SITA, 1991, vol. 1